# EUROPEAN PATENT APPLICATION

(11) **EP 1 764 852 A1**
(43) Date of publication of application: **21.03.2007**
(21) Application number: 05020249.8
(22) Date of filing: 16.09.2005
(51) Int. Cl.: H01M 4/02, H01M 4/62

(54) **Method of manufacturing a lithium battery**

(71) Applicant: Sanyo Component Europe GmbH, 81829 München (DE)
(72) Inventor: Weydanz, Wolfgang, 81827 München (DE); Fietzek, Christopher, 81375 München (DE)
(74) Representative: Kilian, Helmut

(57) **Abstract**

A method of preparing a lithium secondary battery comprising a negative electrode, a positive electrode, an electrolyte and an additive for improving the stability of the solid electrolyte interface (SEI) film forming on the negative electrode, wherein at least part of said additive is applied to said negative electrode before the battery is assembled.

## Description

### FIELD OF THE INVENTION

Lithium Ion batteries are becoming more and more popular, due to increasing mobility of the people. They have established a reputation as a standard technology over the last decade. Today there are several approaches to improve Lithium-Ion batteries, i.e. rechargeable lithium cells. One of them is the strive for higher and higher energy density of the cells.

In the last years, engineering improvements could still increase the energy density of Lithium-Ion cells step by step. The improvements to be gained from advances in this field are becoming smaller and smaller today. Thus, new chemistries and active materials are necessary to improve energy density further.

### RELATED STATE OF THE ART

Lithium alloys with other metals have been known for about 40 years as possible storage materials for Lithium-Ion batteries. They could be used as negative electrode active materials. They have huge active material capacities of up to a factor of about ten (e.g. for silicon) in comparison to graphite. Graphite is used today as the standard material of the negative electrode in Lithium-Ion batteries. The major problem of the lithium alloys is the huge volume increase of the material during lithium uptake, i.e. during reaction with lithium. To control this problem and related effects is crucial for producing an electrode that is stable enough to fulfil the cycling requirements of many hundred charge - discharge cycles.

Additives to the electrolyte are known to improve the performance and decrease the deterioration of the alloy electrode in a practical cell. One of these additives is vinylidene carbonate (VC) (see also EP 0582410 A1) for the use on a graphite electrode. It is also known to work well in improving cycle life of alloy electrodes when added to the electrolyte as a few percent. A few percent of VC can be added to the electrolyte to improve the cycle performance of a graphite or alloy electrode. The use of VC for special thin film alloy electrodes with thin film structure is described in US 2005100790 A.

Its mechanism is thought to be the decomposition on the surface of the active material during the first formation cycle, i.e. the first half cycle, when current is applied to the electrochemical cell for the first time. Aim is to build a thin, closed, stable film on the negative electrode. This film is usually called SEI-film ("solid electrolyte interface").

This mechanism is described in US 6489063. Here the use of halogenated esters as an additives in the amount of 0.5-3% by volume is described. The additive is adsorbed on the carbon electrode surface and reacts on the first use of the electrochemical cell, called "generator" herein.

Many other additives have been found and patent protection has been thought for them. Listing them all here is well beyond the scope of this introduction. The patent is however in no way limited to vinylene carbonate only because it is used as an example for illustration here. All additives that show similar reaction patterns in SEI-film formation could be used in the same way for preparing a Lithium-Ion cell.

For improving the SEI-film and thus cycle stability as much as possible, it is crucial to optimise the SEI-film and film formation procedure.

No further reference to any related preparation or manufacturing technology in relation to the technology presented herein below as the core of the invention was found in the literature.

### SUMMARY OF THE INVENTION

It is an object of the invention to provide a method for improving the stability of the SEI-film.

For forming a thin, closed and stable SEI-film it could be beneficial to increase the amount of additive used in the film forming process. Increasing the amount of additive in the electrolyte could somewhat perform this task. But increasing the amount of additive in the electrolyte has other effects as well. It does change the properties of the electrolyte when more additive is added to it. Also, additives are sometimes very costly, thus the price of the electrolyte is additionally and maybe unnecessarily increased.

The above object is achieved by a method as defined in claim 1. The additive is applied to the respective active material or electrode before building it into a Lithium-Ion cell. Only after this step, which we call "impregnation of the electrode", is the electrode assembled to form a Lithium-Ion cell. This cell is then filled with the electrolyte, containing only a small amount of or even no additive. Nevertheless, the concentration of the additive close to the electrode surface is increased dramatically by this measure. This is especially advantageous for the film formation process.

Especially for the case of using vinylen carbonate (VC) as an additive for this process, we found that the performance of the Lithium-Ion cell is improved dramatically in comparison to a cell using VC only as an additive to the electrolyte.

The dramatic increase in cycle performance, i.e. the reduction of cycling loss is amazing for two reasons. Firstly, the amount of VC on the surface seems to be increased dramatically, although the electrolyte is added shortly afterwards. A more stable film seems to be formed on the surface of the electrode without the influence on or deterioration of other cell properties. Secondly and more amazingly, it was found that the additive already reacts with the active material or electrode surface on first contact. Thus it was shown that the critical parameter is the additive concentration on contact with the active material surface and not as believed previously the first formation cycle, i.e. the first use of the electrochemical cell.

### BRIEF DESCRIPTION OF THE DRAWINGS

- Fig. 1: schematically shows a special embodiment of a negative electrode;
- Fig. 2: schematically shows an electrochemical cell comprising a positive electrode, a separator and a negative electrode;
- Fig. 3: schematically shows an experimental cell; and
- Figs. 4-8: show cycle life graphs for different preparations of the cell.

### DETAILED DESCRIPTION OF EMBODIMENTS OF THE INVENTION

### Description of an example of the negative electrode used in a cell produced according to the invention

The negative electrode was formed as a thin film on a current collector. Special reference is made to US 20020192564 for more details about the making of the thin film electrode used here. A brief description is enclosed here for clarity.

As a current collector, an electrolytic copper foil (thickness: 18µm, and surface roughness Ra: 0.188µm) was used. A silicon thin film was formed on the electrolytic copper foil by RF sputtering, using a radio frequency of 13.56 MHz. Conditions for the sputtering are as follows: sputtering gas (Ar) flow rate: 100 seem ("standard cubic centimetre per minute", equivalent to 4.5 x 10⁻⁵ mol/min), substrate temperature: room temperature (not heated), reaction pressure: 0.133 Pa (1.0 * 10⁻³ Torr), and radio frequency power: 200W. The silicon thin film was deposited to have a thickness of about 5 µm. The resultant silicon thin film was subjected to Raman spectroscopic analysis. As a result, a peak around 480 cm⁻¹ was detected, while a peak around 520 cm⁻¹ was not detected. It is accordingly found that the resultant silicon thin film was an amorphous silicon thin film.

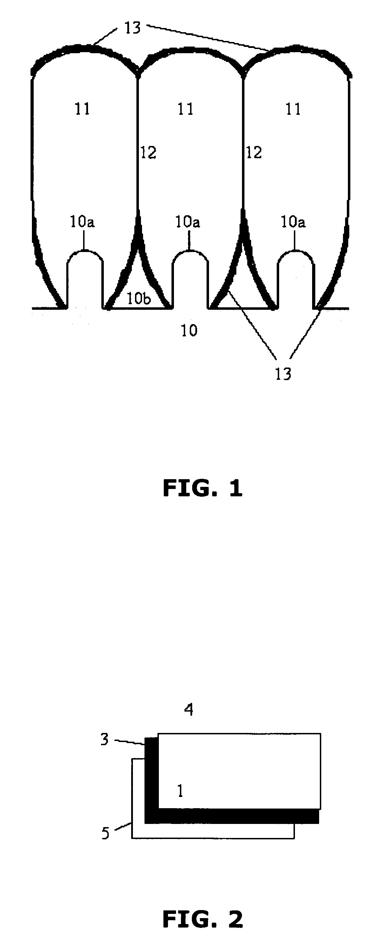

An electrode with alloy material used as the negative electrode in the Lithium-Ion cell described is shown in Fig. 1.

An electrolytic copper foil 10 with a certain surface roughness 10a on which an amorphous silicon thin film 11 was formed was cut out into pieces and then dried at 100°C in vacuum for 2 hours, to obtain a negative electrode. Edges 12 between silicon columns 11 were formed according to valleys 10b on the rough copper foil by this manufacturing procedure. 13 represents the solid electrolyte interface (SEI) film formed on the exposed surfaces of the amorphous silicon thin film 11.

An electrochemical cell 4 containing a negative electrode 1, having silicon as the active material, e.g. of the type described above, a separator 3 and a positive electrode 5 containing, e.g., LiCoO₂ as an active material and, e.g., prepared in conventional film casting technique is shown in Fig. 2. The separator 3 separates the two electrodes 1, 5 electronically and also contains the liquid electrolyte that is added to the cell to operate it. The cell is manufactured as described below.

The following procedure describes a technology used for manufacturing test cells on a laboratory level. All steps were performed in an argon gas filled glove box. The description of the process however does not in any way limit the invention by limiting the manufacturing process to the here described laboratory process used for treating and manufacturing the test cells.

A silicon negative electrode, of the type described above was cut into 25mm x 25mm pieces. A current collector lead tab was fixed to the silicon electrode. Another current collector lead tab was also fixed to the counter electrode. The counter electrode was either a lithium metal electrode or a "slurry coated" electrode containing LiCoO₂ as active material. Then the counter electrode was wrapped into a pocket formed of separator material for easier handling. Chemicals used were a lithium battery standard electrolyte consisting of a mixture of carbonates and 1M LiPF₆ as conducting salt and VC as an additive (battery quality).

### First example of impregnation of the electrode:

The silicon electrode was homogeneously exposed to the pure additive liquid (e.g. VC in one of the cases). About 50µl of additive liquid was used for wetting the surface of the thin film silicon electrode with a quasi-columnar structure. The film formation takes place on all surfaces of the silicon columns that are exposed to the additive liquid. The liquid was put onto the surface of the electrode and homogeneously distributed by some appropriate means. The time for wetting the electrode before the assembly process began was about 1-3 minutes. The electrode was covered during the wetting time, i.e. after application of the additive liquid. This is to prevent excessive evaporation of the additive liquid from the surface of the electrode.

### Second example of impregnation of the electrode:

Alternatively, the wetting process was performed in the following way. A vial was filled with additive liquid to about 0.5cm height. The whole electrode with the tab affixed to it, was submerged in the additive liquid for wetting. The whole electrode was completely covered with the additive liquid. The electrode was left in the additive liquid for approximately 1-2 minutes for completely wetting its surface. Then the electrode was taken out and the excess of additive liquid was left to drip off.

### Third example of impregnation of the electrode:

The third example is an expansion of the second example. The electrode is submerged in the additive liquid as described above. While wetting the electrode in the additive liquid, the whole vial with the electrode in it was put into some means for evacuation. This could be the antechamber of the glove box, a pressure bomb with evacuation connection, a cabinet connected to a pump for evacuation or the like. The pressure was then lowered from atmospheric pressure to below 10 mbar and left at this pressure for about 1 minute. Then the pressure was increased back to atmospheric pressure. The process was repeated twice. Then the electrode was taken out and the excess of additive was left to drip off. The reason for the added processing step was to remove as much gas as possible from the small spaces between the quasi-columns formed on the electrode. Some gas might have been trapped in the process during submerging the electrode in the additive liquid. This could especially be true near the copper foil 10, where the valleys 10b cause void spaces. This could result in an incomplete formation of the surface film formed by the additive liquid on the exposed electrode active surface. Evacuation for gas removal would solve this problem.

### Fourth example of impregnation of the electrode:

Impregnation of the electrode with additive liquid was performed according to that described in the first example. The electrode was then left in the glove box for 2 hours without coverage as mentioned above. After about 10 minutes the additive liquid is already completely evaporated (according to visual observation).

The idea of using this procedure was to see if the additive liquid reacted immediately on the exposed surface of the electrode or if the electrochemical formation was the mechanism to form the SEI film and improve the cycle performance of the cells.

### Further embodiments for impregnation of the electrode:

Preparation of an impregnated electrode by spraying, soaking or applying the additive liquid in any other appropriate way to the electrode surface are also possible.

Other embodiments of the alloy negative electrode are also possible. For example a powder electrode made by pressing or coating or another appropriate means could benefit from this impregnation process. It could even benefit more as the film is formed on the exposed surface of the alloy powder. Thus it is desirable to have as much as possible of the alloy surface exposed to the additive liquid for reaction. Small particles with high surface area would accordingly benefit even more. Powder electrodes could be made of any alloy powder or mixture of alloy powders, for example and preferably using silicon.

In an alternative embodiment, it is preferable that the negative electrode is an electrode with an alloy thin film formed on a roughened electrolytic copper foil.

In another alternative embodiment, it is preferable that the negative electrode is an electrode with an amorphous silicon or silicon alloy thin film formed on a roughened electrolytic copper foil.

### Cell assembly using impregnated electrode:

The wetted electrode obtained by using one of the afore described methods, or a similar method, was assembled into a cell by positioning the negative electrode 1 and counter electrode 5 on top of one another (separated by the envelope formed by the separator 3).

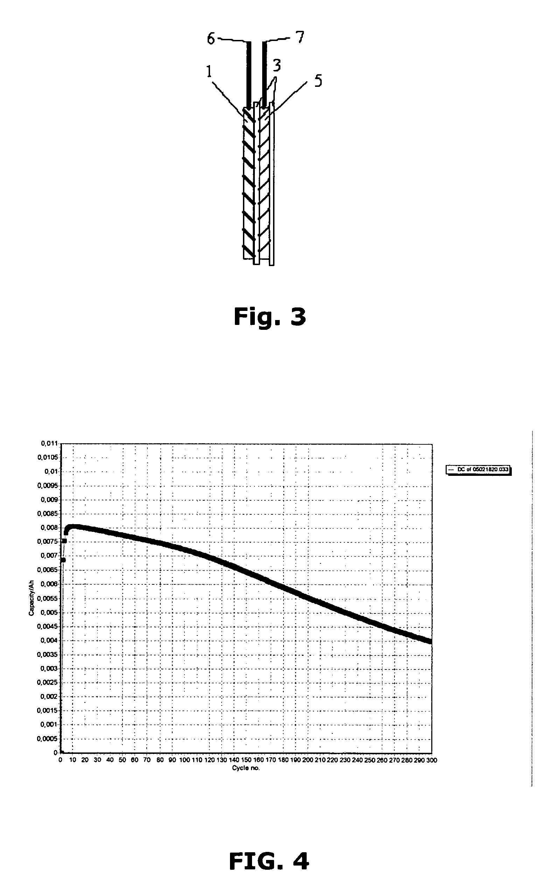

An experimental cell with negative electrode 1, having silicon as the active material, a separator 3 wrapped around the counter electrode 5 like an envelope and counter electrode 5 consisting of either lithium metal as a reference or a slurry coated film consisting of LiCoO₂ as the active material is shown in Fig. 3. Contact leads 6 and 7 are fixed to the negative electrode 1 and counter electrode 5, respectively. The cell is manufactured as described below.

Pouch bag precursors for housing the cell assembly were prepared with top and bottom sides of the pouch bag still being open. The lead tabs 6 and 7 of the negative electrode 1 and counter electrode 5 respectively were then sealed on the top side into the pouch bag, leaving the bottom side of the pouch bag still open. Finally, 300µl of the standard electrolyte (with or without additional additive liquid) are added into the cell in a final step. Then the pouch bags were sealed using a vacuum sealing equipment. The pressure in the cell is adjusted to under 50mbar by evacuation of the pouch before closing it by sealing the bottom side. Thus the pouch bag firmly wraps around the cell and exerts a certain external pressure on the cell stack. Thus the negative electrode 1, the positive electrode 5 and the separator 3 are in firm contact with each other.

The total process of a pouch bag cell assembly takes less than 5 minutes. It is conducted in an argon filled glove box. Some of the VC on the surface may evaporate from the surface of the impregnated electrode during this process. Electrolyte leakage from the cell during the vacuum sealing process is not detected.

After assembly, the pouch bag cells were put between glass plates to exert some additional small but homogeneous pressure on the cell. They were then cycled with a current corresponding to a 1C rate at 20°C in an air conditioned environment. The cells were laying flat during the cycling at all times.

### Data:

Figure 4: Cycle life of a Si negative electrode containing full cell, where the Si negative electrode was impregnated with pure VC. The cell was filled with the standard electrolyte containing 5 volume % VC as an additive afterwards. The theoretical capacity of the cell (Si negative electrode) is 9,62mAh.

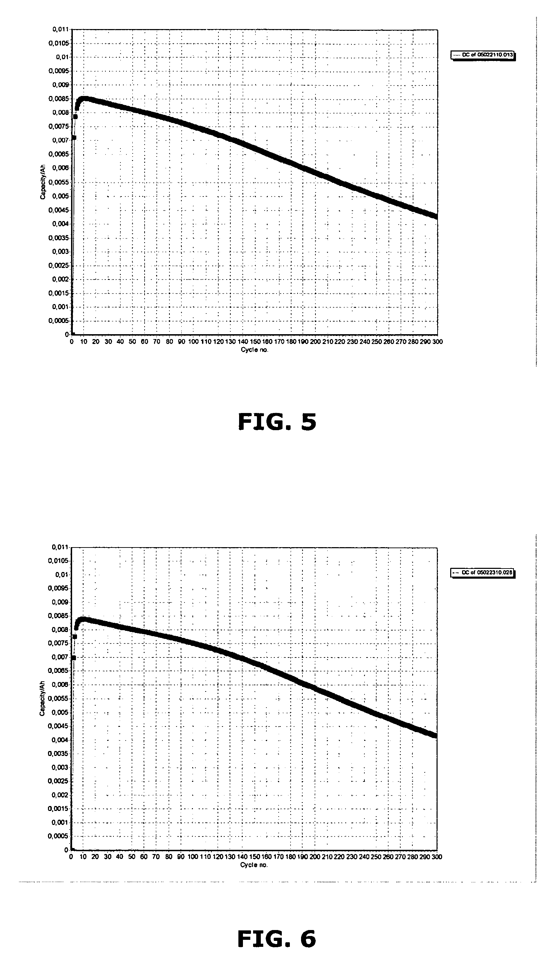

Figure 5: Cycle life of a Si negative electrode containing full cell, where the Si negative electrode was impregnated with pure VC. The cell was filled with the standard electrolyte containing 10 volume % VC as an additive afterwards. The theoretical capacity of the cell (Si negative electrode) is 10,27mAh.
Figure 6: Cycle life of a Si negative electrode containing full cell, where the Si negative electrode was impregnated with pure VC while keeping the electrode under vacuum (repeat twice). The cell was filled with the standard electrolyte containing 5 volume % VC as an additive afterwards. The theoretical capacity of the cell (Si negative electrode) is 9,94mAh.

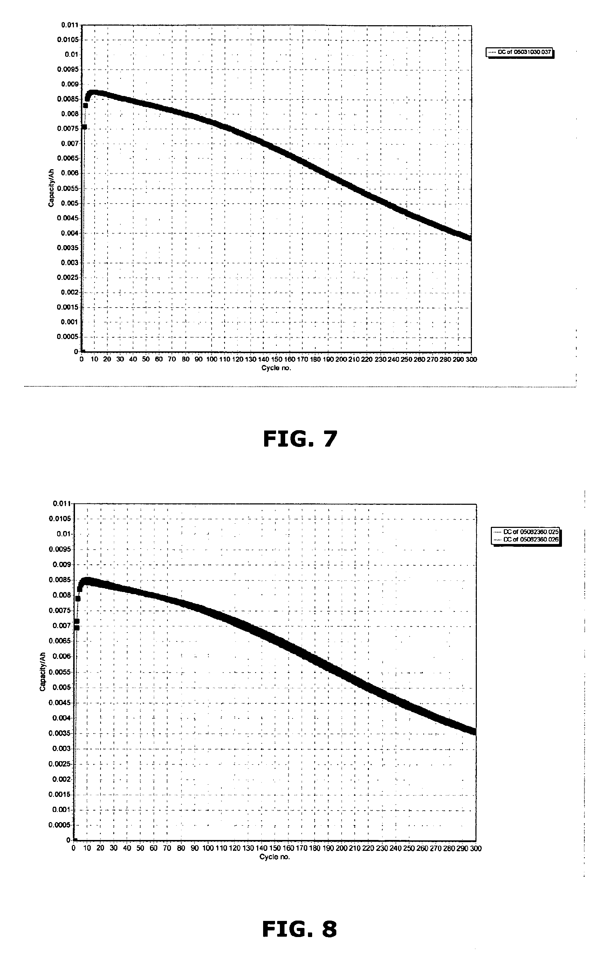

Figure 7: Cycle life of a Si negative electrode containing full cell, where the Si negative electrode was impregnated with pure VC, then left in the glove box for one hour. Afterwards that process, the electrode was completely dry. The cell was filled with the standard electrolyte containing 5 volume % VC as an additive afterwards. The theoretical capacity of the cell (Si negative electrode) is 10,44mAh.
Figure 8: Cycle life of a Si negative electrode containing reference full cell, where the Si negative electrode was not impregnated. The cell was filled with the standard electrolyte containing 10 volume % VC as an additive afterwards. The theoretical capacity of the cells (Si negative electrode) is 9,92mAh and 9,96mAh respectively.

Table 1: Compilation of capacities and relative capacities (in percent of 10^{th} cycle capacity) for cycle numbers 100, 200 and 300 together with preparation methods for all cells shown in Figure 4 through Figure 7. The theoretical capacity in column 3 is the capacity the cell is originally designed for by the Si negative electrode. All capacity values stated are the capacity values for the respective cell with 2.5cm x 2.5cm Si negative electrode.

**Table 1**

| Data in figure | Cell name | theoretical capacity [mAh] | 5th cycle capacity [mAh] | 10th cycle capacity [mAh] | capacity [%] Cycle 100/cycle 10 | capacity [%] Cycle 200/cycle 10 | capacity [%] Cycle 300/cycle 10 | Additive to electrolyte (% by volume) | Process of impregnation, other treatment |
|---|---|---|---|---|---|---|---|---|---|
| 4 | ZE104 | 9.62 | 7.94 | 8.06 | 89.8 | 68.6 | 49.3 | 5% VC | VC imp |
| 5 | ZE107 | 10.27 | 8.31 | 8.52 | 88.1 | 68.7 | 50.1 | 10% VC | VC imp |
| 6 | ZE117 | 9.94 | 8.22 | 8.4 | 89.5 | 69.9 | 49.4 | 5% VC | VC imp, vacuum |
| 7 | ZE133 | 10.44 | 8.63 | 8.76 | 88.3 | 65.5 | 43.6 | 5% VC | VC imp, 1h drying |

Table 2: Capacities and relative capacities (in percent of 10^{th} cycle capacity) for cycle numbers 100, 200 and 300 for reference cells without using the impregnation process, but with the use of 10% VC as an additive liquid, as shown in Figure 8.

**Table 2**

| Cell name | theoretical capacity (mAh) | 5th cycle capacity (mAh) | 10th cycle capacity (mAh) | capacity [%] Cycle 100/cycle 10 | capacity [%] Cycle 200/cycle 10 | capacity [%] Cycle 300/cycle 10 |
|---|---|---|---|---|---|---|
| ZE210 | 9.92 | 8.34 | 8.52 | 87.4 | 63.5 | 41.5 |
| ZE211 | 9.96 | 8.36 | 8.43 | 89.1 | 65.4 | 42.3 |

### Results and discussion:

The impregnation of the columnar silicon electrode increases the concentration of VC at the exposed faces of the silicon electrode. This technique showed a dramatic improvement of cycling behaviour, especially when VC is used as the additive for impregnation.

Nevertheless, impregnation increases the available capacity, especially after 300 cycles. Still about half of the initial capacity is obtained from the best cell here. This is much better than without using the impregnation technique. Only using additives normally results in roughly 40% of the initial capacity remaining after 300 cycles.

Best results were obtained by using pure VC as the impregnating substance and impregnating with pure VC under vacuum. Lower performance was seen when the impregnating substance contained a percentage of EC or electrolyte. Thus we can conclude that electrolyte salt and EC is not necessary for forming the best possible film. VC along seems to be the best film-forming agent. The obtained film is long term stable and seems to have good properties in respect to lithium ion diffusion.

An impregnation under evacuation seems to yield slightly higher performance. This impregnation was tested to improve the wetting of the electrode by removing all gas from the space between the silicon quasi-columns formed on the electrode. This could result in an incomplete formation of the surface film formed by the *additive liquid* on the electrode active surface. This could especially be true near the copper foil 10, where the valleys 10b cause void spaces. Evacuation could reduce this problem.

This should enable better wetting with the impregnation substance. The additional effect of the argon gas removal from the areas specified is slight. There seems to be no wetting of the faces between the columns, but the technique could be useful in the future.

One experiment (refer to Fig. 7) was conducted letting the electrode rest after impregnation. This should give some insight, if a possible film on the surface of the electrode is formed already when the additive liquid comes into contact with the surface. Alternatively, the film could only be formed electrochemically, i.e. when a current is first applied to the cell and thus the cell potential varied in the formation process. After impregnating the electrode, the additive liquid (VC in our case) was left to completely evaporate. The cell performance is not as good as when the surface is still wetted with VC when the cell is assembled. Nevertheless, the performance is better than with a cell that only contains VC as an additive to the electrolyte. This leads to the assumption that VC reacts at least partially on the surface right after contact with it. It does not necessarily need the electrochemical formation as described in other literature before. The amount of VC for electrochemical reactions during the formation process in the cell is reduced through evaporation from the surface after impregnation.

This technique can be applied to other additives. In specific, this technique can also be applied to additives that are not soluble in the standard battery electrolyte or not miscible with it. It thus improves the behaviour or the potential for reaction of certain additives.

The exact mechanism or reaction is not known yet.

This technique can also be employed on other active materials, like other alloy materials or even graphitic materials for the negative electrode. It can especially be employed on electrodes prepared e.g. from alloy powders in an appropriate manner. This was already described before.

## Claims

1. A method of preparing a lithium secondary battery comprising a negative electrode, a positive electrode, an electrolyte and an additive for improving the stability of the solid electrolyte interface (SEI) film forming on the negative electrode, **characterized in that** at least part of said additive is applied to said negative electrode before the battery is assembled.

2. A method according to claim 1, wherein the additive is applied to the negative electrode by wetting the negative electrode with said additive.

3. A method according to claim 1, wherein the additive is applied to the negative electrode by soaking the negative electrode with said additive.

4. A method according to claim 1, wherein the additive is applied to the negative electrode by spraying said additive on the negative electrode.

5. A method according to any of the preceding claims, wherein vinylidene carbonate is used as said additive.

6. A method according to any of the claims 1 - 4, wherein vinylidene carbonate is used as a part of said additive.

7. A method according to any of the preceding claims, wherein the negative electrode is a powder electrode with an alloy powder or mixture of active materials containing an alloy powder.

8. A method according to claim 7, wherein the powder electrode contains silicon or a silicon-containing alloy.

9. A method according to any of claims 1-6, wherein the negative electrode is an electrode with an alloy thin film formed on a roughened electrolytic copper foil.

10. A method according to any of claims 1-6, wherein the negative electrode is an electrode with an amorphous silicon or silicon alloy thin film formed on a roughened electrolytic copper foil.
